# EUROPÄISCHE PATENTSCHRIFT

(11) **EP 1 717 093 B1**
(45) Veröffentlichungstag und Bekanntmachung des Hinweises auf die Patenterteilung: **16.04.2008**
(21) Anmeldenummer: 05103566.5
(22) Anmeldetag: 26.04.2005
(51) Int. Cl.: B60M 1/28

(54) **Messvorrichtung zur Ermittlung der Höhenanlage eines Fahrdrahtes**
Apparatus for measuring the height of a catenary wire
Appareil pour mésurer la hauteur d'un fil de contact

(43) Veröffentlichungstag der Anmeldung: 02.11.2006
(73) Patentinhaber: Franz Plasser Bahnbaumaschinen-Industriegesellschaft m.b.H., 1010 Wien (AT)
(72) Erfinder: Theurer, Josef, 1010, Wien (AT); Gruber, Leopold, 3270, Scheibbs (AT)

(56) Entgegenhaltungen:
- FR-A- 2 677 941
- FR-A- 2 809 683
- JP-A- 6 099 765

## Beschreibung

Die Erfindung betrifft eine Messvorrichtung zur Ermittlung der Höhenlage eines Fahrdrahtes einer elektrischen Oberleitung mit einem durch einen Höhenverstellantrieb verstellbar auf einer Maschine befestigten, Kontaktleisten zur Anlage an die Fahrleitung aufweisenden Messbügel.

Durch FR 2 677 941 und AT 394 687 sind bereits derartige Messvorrichtungen bekannt. Um durch die Fahrwerksfederung verursachte Fehler in bezug auf die Höhenlagemessung des Fahrdrahtes zu vermeiden, stützt sich der Messbügel direkt auf dem Achslager des Fahrwerkes ab.

Die Aufgabe der vorliegenden Erfindung liegt nun in der Schaffung einer Messvorrichtung der eingangs genannten Art, mit der eine genaue Prüfung der Funktionstüchtigkeit des Fahrdrahtes und Einhaltung der diesbezüglichen Sicherheitsanforderungen erzielbar ist.

Diese Aufgabe der Erfindung wird mit einer Messvorrichtung der gattungsgemäßen Art durch die im Kennzeichen des Hauptanspruches angeführten Merkmale gelöst.

Mit Hilfe eines derartig ausgebildeten Messbügels sind verschiedene Messfahrten mit jeweils unterschiedlichen Anpresskräften an den Fahrdraht optimal durchführbar, um die Einsatzfähigkeit einer neu verlegten Oberleitung exakt dokumentieren zu können. Durch die hochfahrbare Hilfskontaktleiste ist eine geringe, durch die Kraftmesseinrichtung genau einstellbare Anpresskraft von etwa 5 bis 8 Newton erzielbar. Mit dieser geringen Anpresskraft ist die statische Ruhelage des Fahrdrahtes exakt eruierbar. Durch Absenken der Hilfskontaktleiste unter die Kontaktleisten des Messbügels kann dieser ungehindert für weitere Testfahrten mit erhöhten Anpresskräften eingesetzt werden.

Weitere Vorteile der Erfindung ergeben sich aus den Unteransprüchen und der Zeichnungsbeschreibung.

Im folgenden wird die Erfindung anhand eines in der Zeichnung dargestellten Ausführungsbeispieles näher beschrieben. Es zeigen

Fig. 1 eine Seitenansicht eines Messbügels mit einer Hilfskontaktleiste, und

Fig. 2 eine schematisierte und vereinfachte Darstellung des Messbügels in Draufsicht, mit einer Steuereinrichtung.

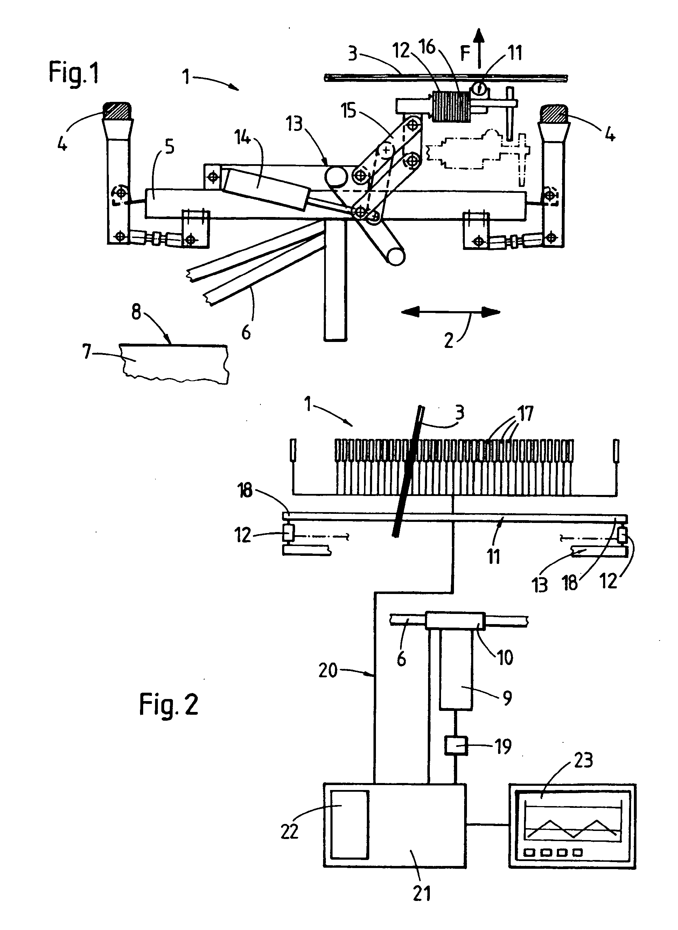

Ein in Fig. 1 und 2 ersichtlicher Messbügel 1 weist zwei in Maschinenlängsrichtung 2 voneinander distanzierte, zur Anlage an einen Fahrdraht 3 (einer nicht näher dargestellten elektrischen Oberleitung) vorgesehene Kontaktleisten 4 auf. Diese sind auf einem Bügelrahmen 5 befestigt, der über ein Gestänge 6 mit einem Maschinenrahmen 7 einer gleisverfahrbaren Maschine 8 verbunden ist. Zur Höhenverstellung des Messbügels 1 ist ein Höhenverstellantrieb 9 und für die Höhenmessung ein Drehwinkelgeber 10 vorgesehen. Der Messbügel 1 dient als Simulation eines Stromabnehmereinsatzes.

Zwischen den beiden Kontaktleisten 4 befindet sich eine normal zur Maschinenlängsrichtung 2 bzw. parallel zu den Kontaktleisten 4 verlaufende Hilfskontaktleiste 11, die an beiden Enden 18 jeweils über eine Kraftmesseinrichtung 12 mit einer Höhenverstelleinrichtung 13 verbunden ist. Diese weist einen Antrieb 14 zur Höhenverstellung einer Parallelogrammanlenkung 15 auf, an der die als Wägezellen 16 ausgebildeten Kraftmesseinrichtungen 12 sowie die Hilfskontaktleiste 11 befestigt sind. Durch den Antrieb 14 ist die Hilfskontaktleiste 11 von einer Ruheposition (s. strichpunktierte Linien in Fig. 1) in eine - über eine durch die beiden Kontaktleisten 4 gebildete - Ebene hinausragende Arbeitsposition verstellbar.

Zur Messung des Zick-Zack Verlaufes des Fahrdrahtes 3 ist eine Anzahl von in regelmäßigen Abständen zueinander angeordneten Näherungsschalter 17 vorgesehen. Diese sind mit der Hilfskontaktleiste 11 verbunden und parallel zu dieser positioniert.

Wie in Fig. 2 ersichtlich, ist ein aus den beiden Kraftmesseinrichtungen 12, dem Höhenverstellantrieb 9 und einem elektropneumatischen Druckregelventil 19 gebildeter Regelkreis 20 vorgesehen, um eine in einer Steuereinrichtung 21 als Soll-Wert eingegebene Anpresskraft F konstant zu halten, mit der die Hilfskontaktleiste 11 an den Fahrdraht 3 angedrückt wird. In der Steuereinrichtung 21 ist ein Speichermedium 22 vorgesehen, um die mit Hilfe des Messbügels 1 registrierten Daten zu speichern. Auf einem Bildschirm 23 sind die registrierten Daten graphisch darstellbar.

Zur Ermittlung der Lage des Fahrdrahtes 3 werden drei Messfahrten durchgeführt. Bei der ersten Messfahrt wird die Hilfskontaktleiste 11 unter Beaufschlagung des Antriebes 14 in die in Fig. 1 dargestellte, über die beiden Kontaktleisten 4 vorragende Position angehoben und mit einer Anpresskraft F von 5 bis 8 Newton an den Fahrdraht 3 angelegt, um dessen statische Ruhelage zu erfassen. Eine fehlerhafte Höhenlage des Fahrdrahtes 3 führt unter Aufrechterhaltung der Anpresskraft F im Rahmen des genannten Regelkreises 20 zu einer Aktivierung des Drehwinkelgebers 10 und wird in Verbindung mit einer Wegmessung im Speichermedium 22 abgespeichert. Parallel dazu erfolgt mit Hilfe der als Lichtwellenleiter ausgebildeten Näherungsschalter 17 eine Erfassung der Zick-Zack Lage des Fahrdrahtes 3.

Die zweite Messfahrt wird bei eingefahrener Hilfskontaktleiste 11 durchgeführt, wobei die Kontaktleisten 4 mit einer Kraft von 100 Newton an den Fahrdraht 3 angepresst werden. Damit erfolgt die Simulation eines normalen Einsatzes eines Stromabnehmers einer Lokomotive.

Schließlich wird eine dritte Messfahrt mit einer Anpresskraft von 250 Newton durchgeführt, um bei Kunstbauten, insbesondere Tunnels, zu prüfen, ob es dabei zu einem Kurzschluss kommen kann.

Die beispielsweise angeführten Anpresskräfte sind davon abhängig, ob es sich bei der Abnahme der Oberleitung um eine Standard- oder Hochleistungsoberleitung handelt.

## Patentansprüche

1. Messvorrichtung zur Ermittlung der Höhenlage eines Fahrdrahtes (3) einer elektrischen Oberleitung mit einem durch einen Höhenverstellantrieb (9) verstellbar auf einer Maschine (8) befestigten, Kontaktleisten (4) zur Anlage an die Fahrleitung (3) aufweisenden Messbügel (1), **dadurch gekennzeichnet, dass** am Messbügel (1) eine durch einen Antrieb (14) höhenverstellbare Hilfskontaktleiste (11) angeordnet ist, der eine Kraftmesseinrichtung (12) zur Erfassung einer durch die Hilfskontaktleiste (11) auf den Fahrdraht (3) einwirkenden Anpresskraft (F) zugeordnet ist, und dass ein Regelkreis (20) zur Aufrechterhaltung einer konstanten Anpresskraft (F) vorgesehen ist.

2. Messvorrichtung nach Anspruch 1, **dadurch gekennzeichnet, dass** die Hilfskontaktleiste (11) im Bereich zweier voneinander distanzierter Enden (18) je durch eine als Kraftmesseinrichtung (12) wirksame Wägezelle (16) mit einer Höhenverstelleinrichtung (13) verbunden ist.

3. Messvorrichtung nach Anspruch 1 oder 2, **dadurch gekennzeichnet, dass** in Längsrichtung der Hilfskontaktleiste (11) in regelmäßigen Abständen zueinander distanzierte Näherungsschalter (17) angeordnet und mit der Höhenverstelleinrichtung (13) verbunden sind.

## Claims

1. A measuring device for determining the vertical position of a contact wire (3) of an electrical catenary, including a measuring pantograph (1) which is fastened on a machine (8) and adjustable by a vertical adjustment drive (9) and comprises contact bars (4) for application to the catenary (3), **characterized in that** an auxiliary contact bar (11), vertically adjustable by a drive (14), is arranged on the measuring pantograph (1), there being associated with the auxiliary contact bar (11) a force measuring device (12) for detecting a pressing force (F) acting upon the contact wire (3) through the auxiliary contact bar (11), and that a control circuit (20) for maintaining a constant pressing force (F) is provided.

2. A measuring device according to claim 1, **characterized in that** the auxiliary contact bar (11) is connected, in the region of two ends (18) spaced from one another, to a vertical adjustment device (13) by means of a respective load cell (16) acting as a force measuring device (12).

3. A measuring device according to claim 1 or 2, **characterized in that** proximity switches (17) are arranged spaced from one another at regular intervals in the longitudinal direction of the auxiliary contact bar (11) and connected to the vertical adjustment device (13).

## Revendications

1. Dispositif de mesure pour déterminer la hauteur d'un fil de contact (3) d'une caténaire électrique avec un étrier de mesure (1) fixé sur une machine (8) de manière réglable par un entraînement de réglage en hauteur (9), présentant des réglettes de contact (4) pour l'appui sur la caténaire (3), **caractérisé en ce qu'**une réglette de contact auxiliaire (11) réglable en hauteur par un entraînement (14), à laquelle est associé un capteur de force (12) pour détecter un effort de contact (F) agissant par la réglette de contact auxiliaire (11) sur le fil de contact (3), est disposée sur l'étrier de mesure (1), et **en ce qu'**un circuit de régulation (20) est prévu pour le maintien d'un effort de contact constant (F).

2. Dispositif de mesure selon la revendication 1, **caractérisé en ce que** la réglette de contact auxiliaire (11) est reliée à un dispositif de réglage en hauteur (13) dans la région de deux extrémités (18) écartées l'une de l'autre chacune par une cellule de pesée (16) agissant comme capteur de force (12).

3. Dispositif de mesure selon la revendication 1 ou 2, **caractérisé en ce que** des détecteurs de proximité (17) écartés les uns des autres à des distances régulières sont disposés dans la direction longitudinale de la réglette de contact auxiliaire (11) et sont reliés au dispositif de réglage en hauteur (13).
